# EUROPÄISCHE PATENTSCHRIFT

(11) **EP 0 786 059 B1**
(45) Veröffentlichungstag und Bekanntmachung des Hinweises auf die Patenterteilung: **18.08.1999**
(21) Anmeldenummer: 95935407.7
(22) Anmeldetag: 29.09.1995
(51) Int. Cl.: F16K 3/00, F16K 3/02, E03F 7/04

(54) **ABSPERRSCHIEBER AUS EINEM GEHÄUSE MIT ANSCHLUSSROHR**
STOP SLIDE VALVE WITH A HOUSING AND A JOINT PIPE
VANNE A TIROIR AVEC UN BOITIER ET UN TUYAU DE RACCORDEMENT

(30) Priorität: 13.10.1994 DE 4436550
(43) Veröffentlichungstag der Anmeldung: 30.07.1997
(73) Patentinhaber: Biesemeier, Heinz, 31718 Pollhagen (DE); Busche, Gerhard, 31700 Heuerszen (DE); Ulbrich, Klaus, 31698 Lindhorst (DE)
(72) Erfinder: Biesemeier, Heinz, 31718 Pollhagen (DE); Busche, Gerhard, 31700 Heuerszen (DE); Ulbrich, Klaus, 31698 Lindhorst (DE)
(74) Vertreter: Mende, Eberhard, Dipl.-Ing.
(86) Internationale Anmeldenummer: EP9503851
(87) Internationale Veröffentlichungsnummer: WO9612129

(56) Entgegenhaltungen:
- EP-A- 0 416 719
- BE-A- 387 468
- CH-A- 302 256
- DE-A- 2 332 642
- G.W.F ; AUSGABE GAS, Bd. 5, Nr. 93, 1.März 1952 MÜNCHEN, Seiten 113-117, FRITZ HERNING 'UNTERSUCHUNGEN ÜBER DIE STAUB EMPFINDLICHKEIT VON ABSPERRSCHIEBERN IN GASLEITUNGEN'

## Beschreibung

Die vorliegende Erfindung betrifft einen Absperrschieber aus einem Gehäuse mit Anschlußrohr für ein strömendes Medium sowie einem im Gehäuseinnern quer zur Strömungsrichtung bewegbar gelagerten und in das Anschlußrohr einführbaren bzw. aus diesem wieder herausführbaren Schieber zur Unterbrechung bzw. Freigabe des Strömungsflusses, wobei der Schieber als Scheibe ausgebildet ist und einen geschlossenen Bereich aufweist, dessen Fläche mindestens dem Innendurchmesser des Anschlußrohres entspricht, sowie einen weiteren Bereich mit einer dem Innendurchmesser des Anschlußrohres entsprechenden Bohrung, und zum Einführen des geschlossenen Bereiches in das Anschlußrohr ziehbar gelagert ist.

Absperrschieber sind hinlänglich bekannt, beispielsweise ist es üblich (Zeitschrift "Power", Februar 1983, Special Report On Valves In General, Seite 3), mittels eines Handrades und hiermit betätigbarer Spindel einen Schieber zu bewegen, der in geschlossenem Zustand des Schiebers in eine Öffnung im Anschlußrohr gepreßt wird. Die Abdichtung erfolgt dabei mittels einer im Gehäuse angeordneten Gummidichtung. Nachteilig hierbei ist, daß die Funktionsfähigkeit solcher Schieber durch Ablagerungen und Fremdkörper gerade im Bereich der Auflage des Schiebers und der Dichtungselemente eingeschränkt ist. Denn Ablagerungen und Fremdkörper, die sich in diesem Bereich befinden, verhindern die geforderte Abdichtung, sie machen vielmehr kostenaufwendige Wartungsarbeiten erforderlich.

Hieran ändert auch wenig eine andere bekannte Konstruktion (s. o. genannte Zeitschrift Seite 17), bei der die Abdichtung im Bereich des Anschlußrohres über eine Gummimembran erfolgt, die als Absperrschieber wirkt. Auch hierbei läßt sich nicht verhindern, daß im Laufe der Zeit unvermeidbare Ablagerungen bzw. vom strömenden Medium mitgeführte Fremdkörper im Bereich des Absperrschiebers hängenbleiben und eine sichere Absperrwirkung ausschließen. Dies gilt in gleicher Weise dann, wenn der Absperrschieber als Verschlußelement verwendet werden soll, aber auch dann, wenn ein solcher Absperrschieber die Aufgabe hat, als Rückstausicherung in einem Rohrleitungssystem zu wirken.

Bekannt ist auch bereits ein Absperrschieber der gattungsgemäßen Art (DE-OS 25 48 626), bei dem der Schieber in einem gesonderten Rohreinsatz in der jeweiligen Bewegungsrichtung geführt ist, wobei das Verschließen des Rohranschlusses durch die Schubbewegung des sog. Schieberkörpers erfolgt. Abgesehen davon, daß ein solcher Rohreinsatz zusätzlicher Abdichtungen gegenüber dem Gehäuse des Absperrschiebers bedarf und damit wartungsabhängiger wird, verhindert die Schubbewegung des Schieberkörpers nicht, daß immer wieder im Strömungskanal befindliche Fremdkörper, beispielsweise Lappen oder Papier, am Boden des Rohreinsatzes festgeklemmt werden und damit die Wirkung des Absperrspeichers als Verschlußelement in Frage gestellt wird.

Darüberhinaus gelangen beim Schließvorgang jedes Mal Schmutzfrachten in den unteren Leerraum für den Schieberkörper, insbesondere beim Einsatz des Absperrschiebers im Schmutzwasserbereich, die die Funktion des Schiebers verhindern. Denn letztlich führen Ablagerungen im unteren Leerraum des Schiebers dazu, daß der Absperrschieber nicht mehr geschlossen werden kann.

Man hat deshalb für den Schmutzwasserbereich, beispielsweise als Rückstausicherung für fäkalienhaltiges Abwasser, Schlauchquetschventilvorrichtungen mit einer Kompressorsteuerung vorgesehen (Passavant Katalog Entwässerungstechnik, Ausgabe 1993, Auszug aus K'91 - Entwässern Gebäude -, Seite 420-423), diese Vorrichtungen sind jedoch kostspielig, störanfällig und von daher wartungsintensiv.

Bekannt ist ferner eine Trennvorrichtung für strangförmiges Gut, z. B. von elektrischen Kabeln oder auch Rohrleitungen (EP 0 416 719), bei der beim Schließen der Vorrichtung ein Teilstück aus dem durchgeführten Kabel oder der Rohrleitung herausgetrennt wird. Eine solche Vorrichtung ist als Verschlußventil beispielsweise für den Schmutzwasserbereich nicht geeignet.

Gleiches gilt auch für eine andere bekannte Ventileinrichtung (BE-A-387 468), bei der der Schieber eines Ventils zwar als Platte mit einer Durchgangsbohrung ausgebildet ist, aber weder die im Durchflußbereich angeordneten Dichtungselemente noch die vorhandene Durchgangsbohrung lassen im Schmutzwasserbereich einen störungsfreien Betrieb erwarten.

In Gasleitungen treten ebenfalls die oben geschilderten Probleme durch im Schmutzwasser mitgeführte feste Bestandteile nicht auf. Der aus GWF, Heft 5/93, Ausgabe Gas, vom 01.03.1952 bekannte Absperrschieber ist daher aufgrund seiner speziellen Konstruktion zur Lösung dieser Probleme nicht geeignet.

Ausgehend von diesem Stand der Technik liegt daher der Erfindung die Aufgabe zugrunde, eine Möglichkeit zu finden, Absperrschieber der gattungsgemäßen Art so zu gestalten, daß sie weitgehend wartungsfrei sind, und daß sie unbeeinflußt von im Laufe der Zeit unvermeidbaren Ablagerungen oder im Strömungsmedium mitgeführter Fremdkörper zuverlässig abdichten.

Gelöst wird diese Aufgabe gemäß der Erfindung dadurch, daß der dem geschlossenen Bereich der Scheibe zugekehrte Randbereich der Bohrung als Schneidkante ausgebildet ist, die beim Einführen des geschlossenen Bereiches in das Anschlußrohr mit der äußeren Umfläche des Anschlußrohres im Führungsbereich des Schiebers im Wirkzusammenhang steht.

Durch das Zusammenwirken von Schneidkante und Umfläche des Anschlußrohres beim Schließvorgang haben insbesondere im Fäkalienbereich mitgeführte Feststoffe keine Möglichkeit mehr, eine vollständige Schließung des Absperrschiebers im Bedarfsfall zu verhindern. Bei der Bewegung des scheibenförmigen Schiebers in die Schließstellung werden dann nämlich die sich im Bereich der Scheibe befindlichen Feststoffe durchtrennt, so daß sie problemlos von dem strömenden Medium mitgenommen werden. Aber auch ohne solche den Schließvorgang behindernde Feststoffe ergeben sich bei der erfindungsgemäßen Ausführungsform Vorteile dadurch, daß im Kanten- /oder Schneidbereich liegende Teilchen, wie Steine, Kerne und dergl., die bei den vorbekannten Absperrschiebern den Schließvorgang blockieren, beim Hochziehen der Scheibe von den Kanten herunterfallen und damit aus dem Schließbereich automatisch entfernt werden. Dabei ist es besonders vorteilhaft, wenn die Scheibe von unten nach oben gezogen wird. Mit dem Hochziehen der Scheibe und der sich damit vermindernden lichten Weite der Durchgangsbohrung durch die Scheibe erhöht sich die Durchflußgeschwindigkeit im abzudichtenden Bereich, so daß Ablagerungen und Fremdkörper beschleunigt aus dem Fließbereich herausgeschwemmt werden. Dies führt praktisch zu einer selbsttätigen Reinigung der Absperrstelle, insbesondere auch deshalb, weil, wie bereits ausgeführt, noch im Bereich der Durchgangsbohrung haftende Fremdkörper vor dem endgültigen Verschließen des Anschlußrohres von den Rändern der Durchgangsbohrung durchtrennt und damit die zerkleinerten Teile problemlos fortgeschwemmt werden können.

Die Betriebssicherheit und Funktionstüchtigkeit des erfindungsgemäßen Absperrventils ist daher gegenüber den bekannten Anordnungen gegeben. Das Hineinziehen der Scheibe in den Absperrzustand erfolgt bei senkrechter Montage des Schiebers von unten nach oben, bei geneigtem Einbau des Absperrschiebers in ein Leitungssystem entsprechend der jeweiligen Schräglage.

Die gemäß der Erfindung verwendete Scheibe mit integrierter Durchgangsbohrung kann in ihrer äußeren Form dem jeweiligen Gehäuse des Absperrschiebers angepaßt werden, sie kann daher eine beliebige äußere Form aufweisen. Ovale und ellipsenförmig ausgebildete Scheiben haben sich in ihrer Handhabung und Anpassung an die Gehäuseabmessungen des Absperrschiebers als besonders vorteilhaft erwiesen.

Der besondere Vorteil der Erfindung ist auch darin zu sehen, daß die Abdichtungen für die als Schieber wirkende und mit einer Durchgangsbohrung versehene Scheibe außerhalb des Anschlußrohres im Bereich der Scheibenführung angeordnet sind. Von mitgeführten Fremdkörpern bleiben diese Dichtungen daher unbeeinflußt. Als Dichtmittel selbst können an sich bekannte Elemente verwendet werden, vorteilhaft besteht die Abdichtung aus zwei O-Ringen, zwischen denen die Scheibe des Absperrschiebers hindurchführbar ist.

Ist es erforderlich, den Durchfluß aggresiver, beispielsweise güllehaltiger, Medien zu sperren oder freizugeben, kommt es also darauf an, auch beim Betrieb mit solchen Medien die Betriebssicherheit des Absperrschiebers zu gewährleisten, wird in Weiterbildung der Erfindung auch der Raum für den Antrieb des Schiebers, beispielsweise der Spindelraum, abgedichtet.

Vorteilhaft ist es auch, wenn man den dem geschlossenen Bereich der Scheibe abgekehrten Randbereich der in den Schieber integrierten Bohrung ein- oder beidseitig anschleift. Beim Überfahren der jeweiligen Dichtungen werden so leichter Ablagerungen aus dem Dichtbereich ausgestoßen, sie gelangen in den Strömungskanal und werden dort vom strömenden Medium weggeschwemmt. Hinzukommt, daß entsprechend der erfindungsgemäßen Maßnahme, nämlich den Randbereich der Bohrung anzuschleifen, die Dichtungen selbst durch das sukzessive Überfahren und Hineinpressen in die Nut vor Beschädigungen beim Schließvorgang geschützt sind.

Die Mehrzahl gattungsgemäßer Absperrschieber ist von Hand betätigbar, wobei mittels eines Handrades die am anderen Ende mit dem eigentlichen Schieber versehene Antriebsspindel in die eine oder andere Richtung gedreht wird. Dieser Antrieb wird in Durchführung der Erfindung vorteilhaft elektrisch, elektromechanisch, pneumatisch oder auch hydraulisch erfolgen, das gilt insbesondere dann, wenn der erfindungsgemäße Absperrschieber Sicherungsfunktionen übernimmt, d. h., in Notfällen, beispielsweise um einen Rückstau zu vermeiden, kurzfristig und in Durchführung der Erfindung automatisch gesteuert betätigt wird.

Die Erfindung sei anhand der in den Figuren 1 bis 7 dargestellten Ausführungsbeispiele näher erläutert.

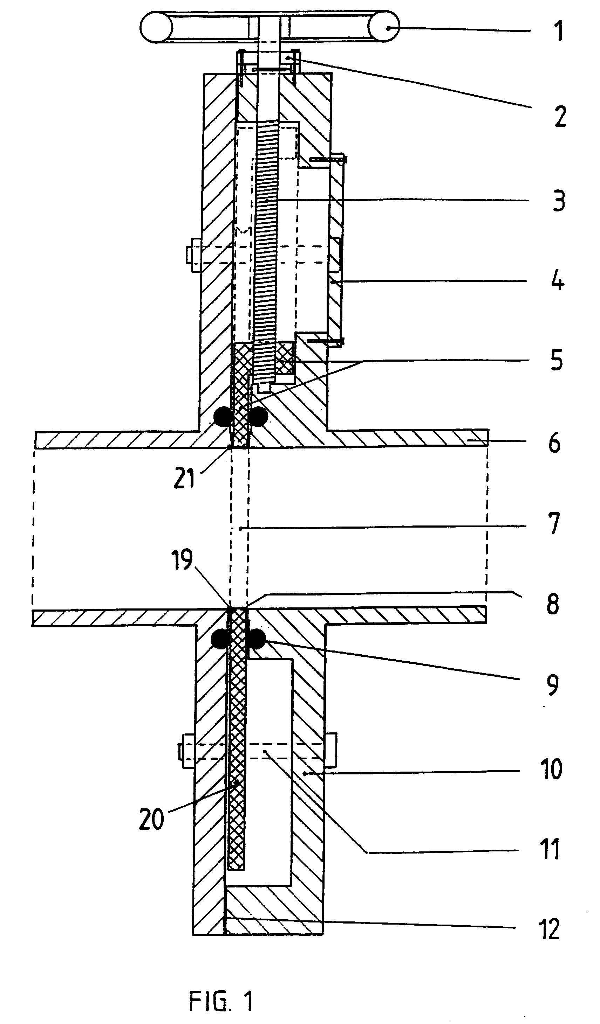

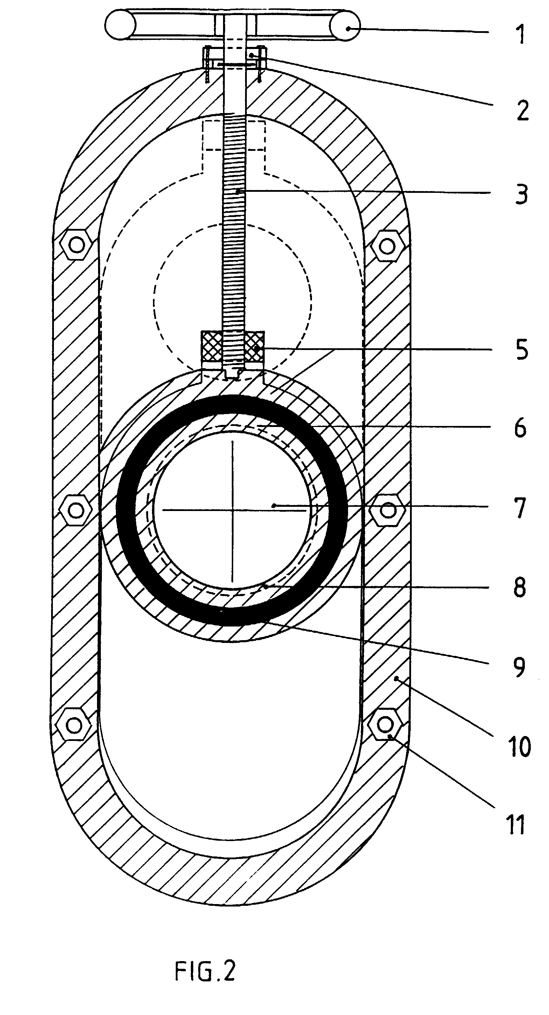

Dabei zeigt die Fig. 1 den erfindungsgemäßen Absperrschieber im Längsschnitt, während der gleiche Absperrschieber in der Fig. 2 im Querschntt dargestellt ist.

In der Fig. 3 ist der Absperrschieber im geöffneten Zustand und mit einer zusätzlichen Abdichtung des Spindelraumes dargestellt, die Fig. 3a zeigt den gleichen Absperrschieber im geschlossenen Zustand.

Die Fig. 4 verdeutlicht die zusätzliche Abdichtung in einem Querschnitt.

Die Fig. 5 bis 7 verdeutlichen Abbildungen des Randbereiches der Durchflußbohrung im Schieber.

Entsprechend der Fig. 1 ist das hier verwendete Handrad des Absperrschiebers mit 1 bezeichnet, in der Halterung 2 ist die Antriebsspindel 3 geführt. Eine Öffnung 4 ist für Reinigungs- oder Wartungszwecke im Gehäuse des Absperrschiebers vorgesehen, der erfindungsgemäß ausgebildete Schieber ist mit 5 bezeichnet, er ist als metallische Scheibe ausgebildet. Das Gehäuse des Absperrschiebers beinhaltet gleichzeitig das Anschlußrohr 6, an dessen beiderseitige Enden weiterführende Rohre, beispielsweise über nicht dargestellte Flansche, angeschlossen werden können. Der Innendurchmesser des Anschlußrohres 6 entspricht der Durchgangsbohrung 7 in dem als Scheibe ausgebildeten Schieber 5. Der die Durchgangsbohrung 7 begrenzende, dem geschlossenen Bereich 20 der Scheibe 5 zugekehrte Randbereich 8 ist mit einer Schneidkante 19 versehen, die beim Einführen des geschlossenen Bereiches 20 in das Anschlußrohr 6 mit der äußeren Umfläche 21 des Anschlußrohres 6 im Führungsbereich der Scheibe 5 als Gegenschneidkante zusammenwirkt. Damit ist sichergestellt, daß beim Hochziehen der Scheibe 5 nach entsprechender Betätigung des Handrades 1 im Zusammenwirken mit der äußeren Umfläche des Anschlußrohres 6 im Führungsbereich der Scheibe 5 befindlichen Fremdkörper insbesondere auch faseriger Art, die immer wieder zu Störungen im Schließbereich Anlaß geben, durchgetrennt werden. In der durch die verminderte Öffnung erhöhten Strömung können dann die durchteilten Fremdkörper schnell und sicher entfernt werden.

Wie dargestellt, befinden sich die Schieberdichtungen 9 außerhalb des Einflußbereiches des strömenden Mediums, sie sind erfindungsgemäß aus dem Bereich des Anschlußrohres 6 herausgenommen.

Durch die erfindungsgemäße Abbildung des Schiebers als Scheibe 5 gestaltet sich der gesamte Aufbau des Absperrschiebers raumsparend, einfach und montagefreundlich. Angepaßt an den einfachen Bewegungsablauf der Scheibe 5 beim Öffnen oder Schließen des Anschlußrohres 6 und an die spezielle äußere Form des Schiebers als mit einer Durchgangsbohrung 7 versehene Scheibe, ist das Gehäuse 10 zweiteilig ausgebildet, die beiden Teile können mittels der Schrauben 11 problemlos zusammengefaßt und das Gehäuseinnere mittels eingelegter Dichtungselemente 12 sicher verschlossen werden.

Die Fig. 1 zeigt den erfindungsgemäßen Absperrschieber in geöffnetem Zustand. Ist, wie in der Fig. 2 erkennbar, der scheibenförmige Schieber 5 in die im oberen Teil der Fig. gstrichelt dargestellte Lage gebracht, nämlich nach oben gezogen, dann verschließt der in den Figuren noch unterhalb des Anschlußrohres 6 befindliche geschlossene Bereich der Scheibe den Strömungsquerschnitt des Anschlußrohres 6 vollständig, so daß eine einwandfreie Abschottung oder Absperrung sichergestellt ist.

Die Erfindung ist selbstverständlich nicht auf die dargestellte Ausführungsform mit Handrad beschränkt. Elektrische, elektromechanische, pneumatische oder hydraulische Antriebsmittel sind vorteilhaft einsetzbar. Die betriebssichere Funktionsweise des erfindungsgemäßen Absperrschiebers erlaubt zudem seinen Einsatz als Verschluß- und/oder Rückstausicherung auch im Zusammenhang mit Kontroll- oder Meldeeinrichtungen im Rohrleitungssystem, die in Störfällen durch Übermittlung entsprechender Signale an den Absperrschieber dessen Öffnen oder Schließen veranlassen.

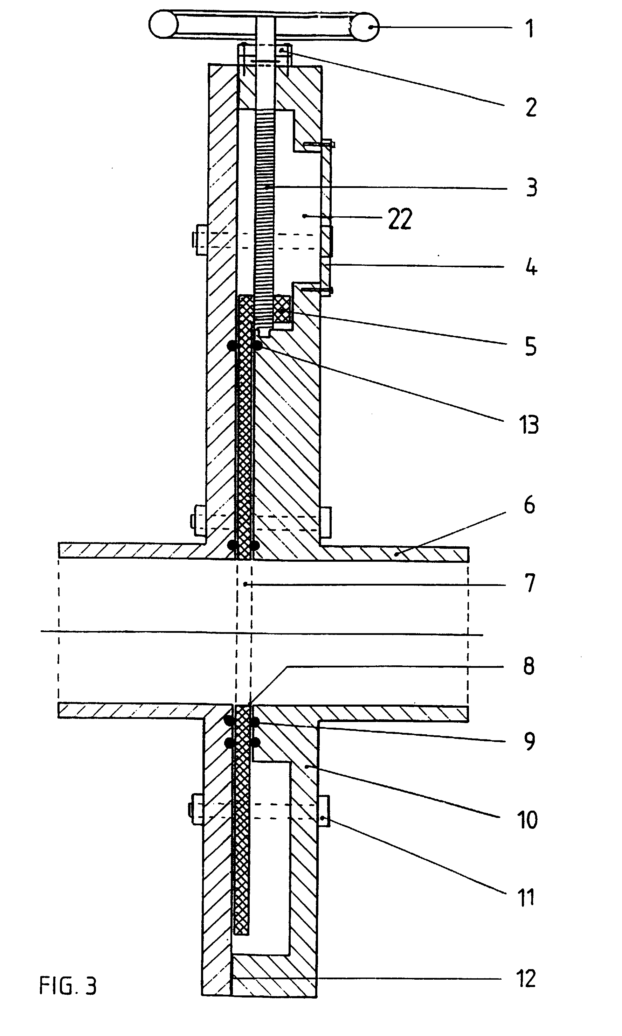

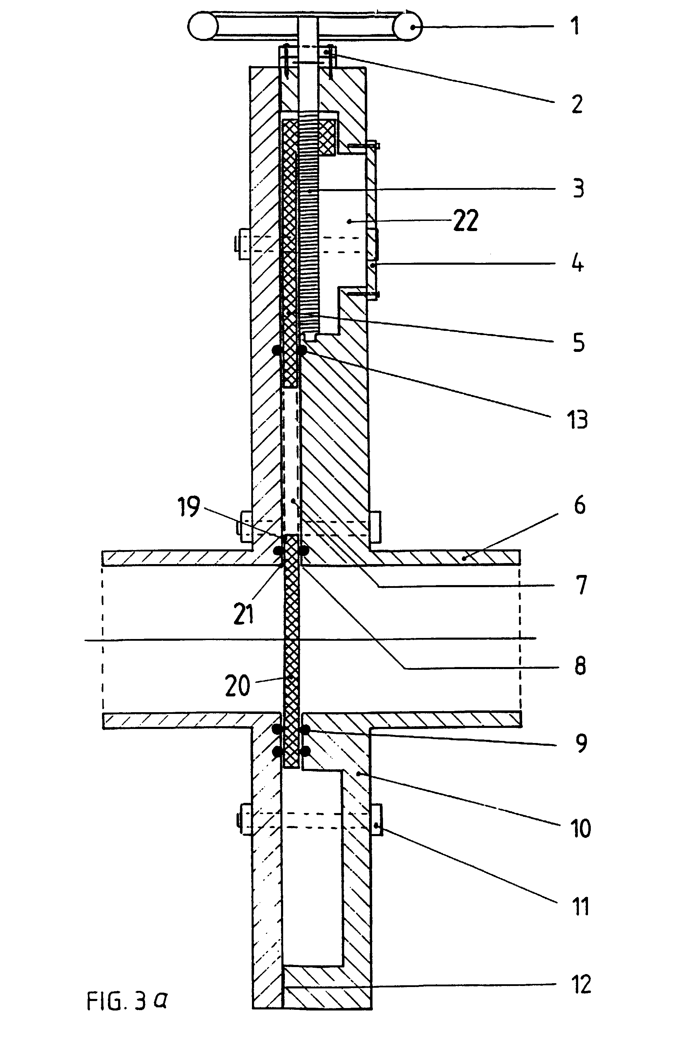

Da in Rohrleitungsnetzen auch aggressive, beispielsweise güllehaltige Medien transportiert und dementsprechend deren Durchfluß gesperrt oder freigegeben werden muß, kommt es mitunter darauf an, die Antriebsmittel vor diesen aggressiven Medien zu schützen. Diesem Zweck dient die in der Fig. 3 dargestellte zusätzliche Dichtung 13. Sie dichtet den zu schützenden Spindelraum 22 sicher ab, unabhängig davon, ob, wie die Fig. 3 zeigt, der Absperrschieber den Durchfluß des Mediums freigegeben oder, wie die Fig. 3a verdeutlicht, den Durchfluß gesperrt hat. Die Durchgangsbohrung 7 in dem als Scheibe 5 ausgebildeten Schieber befindet sich dabei oberhalb des Anschlußrohres 6.

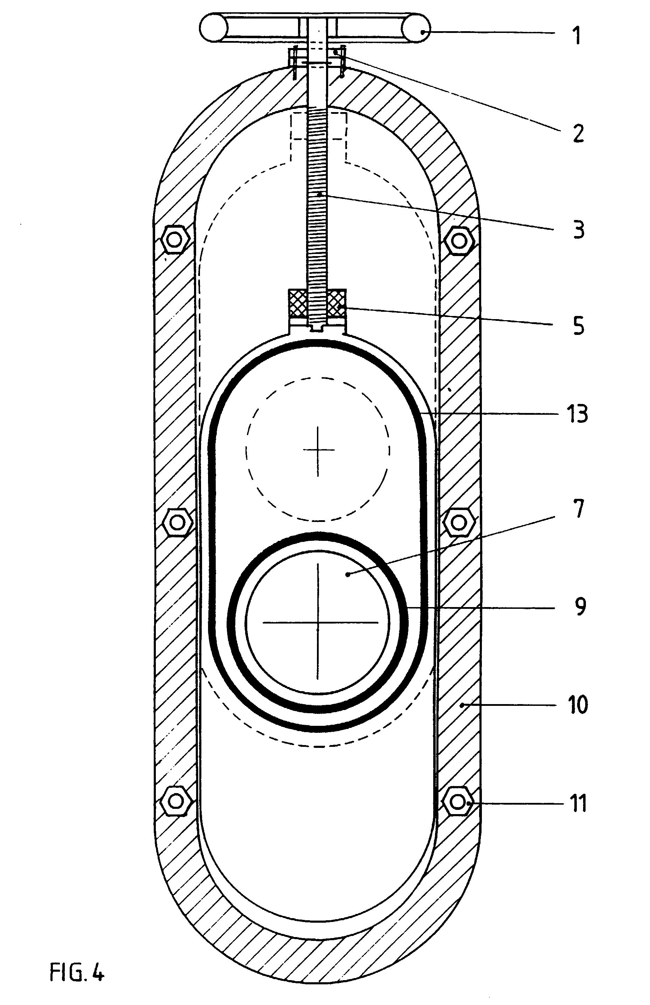

Die Fig. 4 verdeutlicht die zusätzliche Abdichtung 13, beispielsweise mittels eines oder mehrerer O-Ringe, in einer anderen Ansicht.

Ausgehend von einer senkrecht zur Rohrleitung durchgeführten Bewegung des Schiebers 5 zum Sperren und Öffnen eines Rohrleitungssystems zeigt die Fig. 5 die Ausbildung des oberen Kantenbereiches 14 der Durchgangsbohrung 7 im Schieber 5. Beidseitig ist dieser Kantenbereich 14 mit Schrägen 15 z. B. durch Anschleifen versehen, sie tragen beim jeweiligen Überfahren des Dichtungsringes 9 dazu bei, daß möglicherweise im Dichtungsbereich vorhandene Ablagerungen leicht ausgestoßen werden können und damit in den Strömungskanal gelangen und weggeschwemmt werden, sie tragen beim Schließvorgang aber auch durch das sukzessive Überfahren der Dichtungen und deren Hineinpressen in die Aufnahmenuten zum Schutz der Dichtungen vor Beschädigungen bei.

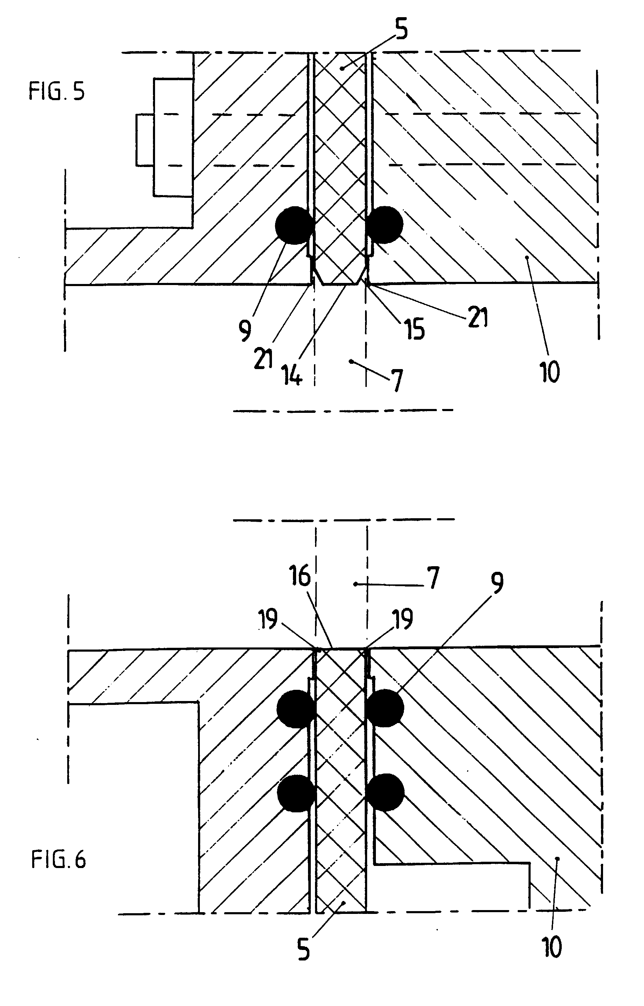

Bei gleicher Schieberstellung wie in der Fig. 5 zeigt die Fig. 6 den unteren Kantenbereich 16 der Durchgangsbohrung 7 im Schieber 5. Diese Kantenausbildung entspricht der in der Fig. 1 dargestellten Ausführungsform, die beiden Kanten 19 treten beim Hochziehen der Scheibe 5 mit den Kanten 21 in Wirkzusammenhang, d. h. sie vollführen einen Schneid- oder Trennvorgang an dort eingeklemmten Gut, wenn, wie es sich nicht vermeiden läßt, in einem Rohrleitungssystem für fließfähige Medien auch Festkörper mittransportiert werden. Diese machen, wenn sie beim Schließen des Absperrschiebers vom Schieber eingeklemmt werden, eine Abdichtung unmöglich. Die Erfindung ermöglicht mit der Bewegung des Schiebers eine Durchtrennung, also Zerkleinerung im Dichtungsbereich festliegender Materialien.

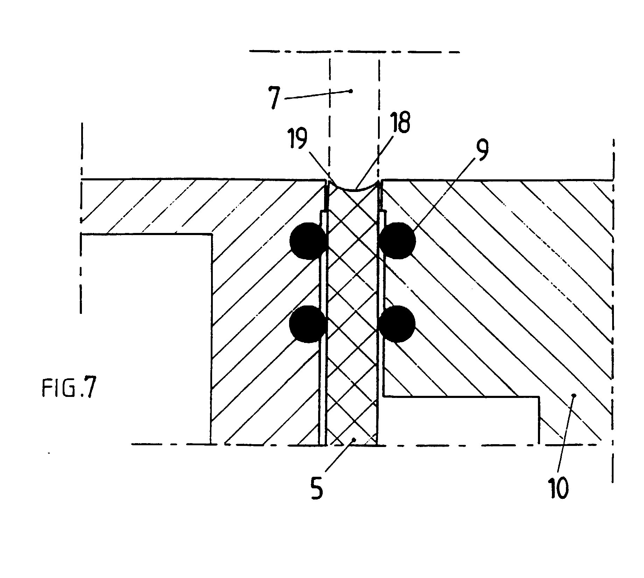

Abweichend hiervon zeigt die Fig. 7 den Kantenbereich 18 hohlkehlenartig ausgebildet mit zwei seitlich liegenden Messerkanten 19. Beim Ziehen des Schiebers 5 in die Schließstellung des Absperrschiebers werden auch hier im Zusammenwirken mit den Kanten 21 ggf. vorhandene feste Materialien beim Einführen dieses Kantenbereiches 18 in das Gehäuse durchtrennt und die Einzelteile weggeschwemmt.

## Patentansprüche

1. Absperrschieber aus einem Gehäuse (10) mit Anschlußrohr (6) für ein strömendes Medium sowie einem im Gehäuseinnern quer zur Strömungsrichtung bewegbar gelagerten und in das Anschlußrohr (6) einführbaren bzw. aus diesem wieder herausführbaren Schieber (5) zur Unterbrechung bzw. Freigabe des Strömungsflusses, wobei der Schieber (5) als Scheibe ausgebildet ist und einen geschlossenen Bereich (20) aufweist, dessen Fläche mindestens dem Innendurchmesser des Anschlußrohres (6) entspricht, sowie einen weiteren Bereich mit einer dem Innendurchmesser des Anschlußrohres (6) entsprechenden Bohrung (7) und zum Einführen des geschlossenen Bereiches (20)in das Anschlußrohr (6) ziehbar gelagert ist, dadurch gekennzeichnet, daß der dem geschlossenen Bereich (20) der Scheibe (5) zugekehrte Randbereich der Bohrung (7) mit einer Schneidkante (19) ausgebildet ist, die beim Einführen des geschlossenen Bereiches (20) in das Anschlußrohr (6) mit der äußeren Umfläche (21) des Anschlußrohres (6) im Führungsbereich der Scheibe (5) im Wirkzusammenhang steht.

2. Absperrschieber nach Anspruch 1, dadurch gekennzeichnet, daß die Scheibe (5) eine ovale oder ellipsenförmige Form aufweist.

3. Absperrschieber nach Anspruch 1 oder 2, dadurch gekennzeichnet, daß die Abdichtung (9) für die Scheibe (5) außerhalb des Anschlußrohres (6) im Bereich der Scheibenführung angeordnet ist.

4. Absperrschieber nach Anspruch 3, dadurch gekennzeichnet, daß die Abdichtung (9) aus einem oder mehreren O-Ringen besteht, zwischen denen die Scheibe (5) hindurchführbar ist.

5. Absperrschieber nach Anspruch 1 oder einem der folgenden, gekennzeichnet durch eine zusätzliche Dichtung (13) zur Abdichtung eines Antriebsraumes (22).

6. Absperrschieber nach Anspruch 1 oder einem der folgenden, dadurch gekennzeichnet, daß der dem geschlossenen Bereich (20) der Scheibe (5) abgekehrte Randbereich der Bohrung (7) ein- oder beidseitig angeschliffen ist.

7. Absperrschieber nach Anspruch 1 oder einem der folgenden, dadurch gekennzeichnet, daß die Scheibe (5) im montierten Zustand des Schiebers in einer Schräglage ziehbar gelagert ist.

8. Absperrschieber nach Anspruch 1 oder einem der folgenden, dadurch gekennzeichnet, daß seine Betätigung elektrisch, elektromechanisch, pneumatisch oder hydraulisch erfolgt.

## Claims

1. Stop slide valve consisting of a housing (10) with a connecting pipe (6) for a flowing medium and of a slide gate (5) which is mounted in the interior of the housing so that it can be moved transversely to the direction of flow and can be guided into the connecting pipe (6) or guided out of the latter again to interrupt or release the flow, the slide gate (5) being embodied as a disc and exhibiting a closed portion (20) the area of which at least corresponds to the inside diameter of the connecting pipe (6), and a further portion with a bore (7) corresponding to the inside diameter of the connecting pipe (6) and being mounted so that it can be drawn to guide the closed portion (20) into the connecting pipe (6), characterised in that the edge portion of the bore (7) facing the closed portion (20) of the disc (5) is formed with a cutting edge (19) which cooperates with the outer surrounding area (21) of the connecting pipe (6) in the area of the guide of the disc (5) when the closed portion (20) is guided into the connecting pipe (6).

2. Stop slide valve according to claim 1, characterised in that the disc (5) exhibits an oval or elliptical shape.

3. Stop slide valve according to claim 1 or 2, characterised in that the sealing (9) for the disc (5) is located outside the connecting pipe (6) in the area of the disc guide.

4. Stop slide valve according to claim 3, characterised in that the sealing (9) consists of one or more O-rings, between which the disc (5) can be guided.

5. Stop slide valve according to claim 1 or one of the following claims, characterised by an additional seal (13) for sealing a drive space (22).

6. Stop slide valve according to claim 1 or one of the following claims, characterised in that the edge area of the bore (7) facing away from the closed portion (20) of the disc (5) is ground on one or both sides.

7. Stop slide valve according to claim 1 or one of the following claims, characterised in that the disc (5) is mounted so that it can be drawn when the slide gate is fitted in an oblique attitude.

8. Stop slide valve according to claim 1 or one of the following claims, characterised in that its operation is effected electrically, electromechanically, pneumatically or hydraulically.

## Revendications

1. Vanne tiroir composée d'un corps (10) avec un tuyau de raccordement (6) pour recevoir un fluide en mouvement ainsi que d'un tiroir (5) monté mobile à l'intérieur du corps, transversalement à la direction d'écoulement et susceptible d'être introduit dans le tuyau de raccordement (6) ou d'en être extrait pour couper ou libérer le passage du fluide, le tiroir (5) étant en forme de plaque ayant une zone fermée (20) dont la surface correspond au moins au diamètre intérieur du tuyau (6), ainsi qu'une autre zone avec un perçage (7) correspondant au diamètre intérieur du tuyau (6), en étant monté de manière coulissante dans le tuyau (6) pour y introduire la zone fermée (20),
caractérisée en ce que
la zone du bord du perçage (7) située du côté de la zone fermée (20) de la plaque (5) comporte une arête de coupe (19) qui, à l'introduction de la zone fermée (20) dans le tuyau (6), coopère avec la surface périphérique extérieure (21) du tuyau (6) dans la zone de guidage de la plaque (5).

2. Vanne tiroir selon la revendication 1,
caractérisée en ce que
la plaque (5) a une forme ovale ou elliptique.

3. Vanne tiroir selon la revendication 1 ou 2,
caractérisée en ce que
le joint (9) de la plaque (5) se trouve à l'extérieur du tuyau (6) dans la zone du moyen de guidage de la plaque.

4. Vanne tiroir selon la revendication 3,
caractérisée en ce que
le joint (9) est formé d'un ou plusieurs joints toriques entre lesquels passe la plaque (5).

5. Vanne tiroir selon la revendication 1 ou l'une des revendications suivantes,
caractérisée par
un joint supplémentaire (13) pour assurer l'étanchéité de la chambre d'entraînement (22).

6. Vanne tiroir selon la revendication 6 ou l'une des revendications suivantes,
caractérisée en ce que
la zone du bord du perçage (7), non tournée vers la zone fermée (20) de la plaque (5), est meulée sur un côté ou sur les deux côtés.

7. Vanne tiroir selon la revendication 1 ou l'une des revendications suivantes,
caractérisée en ce que
le disque (5) est monté de façon à pouvoir être tiré dans une position en biais lorsque le tiroir est installé.

8. Vanne tiroir selon la revendication 1 ou l'une des revendications suivantes,
caractérisée par
un moyen d'actionnement électrique, électromécanique, pneumatique ou hydraulique.
